# EUROPEAN PATENT SPECIFICATION

(11) **EP 1 268 684 B1**
(45) Date of publication and mention of the grant of the patent: **31.05.2006**
(21) Application number: 01912631.7
(22) Date of filing: 02.03.2001
(51) Int. Cl.: C09D 9/00, C11D 7/50

(54) **AGENT FOR CLEANING**
REINIGUNGSAGENS
AGENT DE NETTOYAGE

(30) Priority: 02.03.2000 SE 0000687
(43) Date of publication of application: 02.01.2003
(73) Proprietor: Stripp Chemicals AB, 431 50 Mölndal (SE)
(72) Inventor: KARLSSON, Kjell, S-431 60 Mölndal (SE); MAGNUSSON, Hans, S-430 50 K llered (SE)
(74) Representative: Cederbom, Hans Erik August
(86) International application number: PCT/SE2001/000457
(87) International publication number: WO 2001/064797

(56) References cited:
- DE-A1- 2 835 769
- US-A- 4 780 235
- US-A- 5 310 496
- DATABASE CAPLUS [Online] DOC. NO. 128:245506 HAKUTO K.K.: 'Cleaning method for inside walls of coating-supplying pipes and N-methylpyrrolidone-based cleaner compositions therefor', XP002956070 Retrieved from STN International Database accession no. 1998:155226 & JP 10 068 000 A 10 March 1998
- DATABASE WPI Week 9612, Derwent Publications Ltd., London, GB; AN 1996-115110, XP002956061 & SE 9 401 735 A (BALLTORP KEMI AB) 20 November 1995
- DATABASE WPI Week 8321, Derwent Publications Ltd., London, GB; AN 1983-50179K, XP002956062 & JP 58 063 762 A (TOYOTA JIDOSHA KK) 15 April 1983

## Description

The present invention relates to an agent for cleaning objects, such as the removal of paint, lacquer, rubber, adhesive and plastic.

Chlorinated solvents, such as methylene chloride and trichloroethylene, have been in use for some considerable time in industry for this purpose.

It is now a well known fact that these substances are carcinogenic and cause damage to the central nervous system. They also contribute to acidification in nature.

Today's industrial painting process utilizes a great deal of paints of the two-component type, for example epoxy and isocyanate paints and powder coatings. Faults occur in the paint coating from time to time, which require removal of the paint and reapplication, especially in the case of expensive items and for large series. The painting process also often makes use of special fixtures for suspending the work piece. These must also be cleaned of paint at regular intervals. The methods used for paint removal can be subdivided traditionally into thermal, mechanical and chemical paint removal methods.

Thermal denotes burning off at high temperature. This is only possible with components which are able to withstand a high temperature and are not sensitive to deformation. Components made of aluminium, for example, are not suitable for this method. The method also gives rise to fumes, which are undesirable from an environmental point of view.

Mechanical paint removal essentially denotes blasting with different types of blasting agent, e.g. sand or steel balls. This method is also not suitable for components which are sensitive to mechanical deformation or are subject to requirements in respect of surface fineness. The method also creates dust, which is undesirable in a painting plant from the point of view of quality.

Agents based on caustic soda or methylene chloride have been used primarily for chemical paint removal. Caustic soda cannot be used on aluminium because caustic soda has a severely corrosive effect on this metal. It is also not effective on modern two-component paints or powder coatings. Methylene chloride is a very good paint removal agent on most substrates and paint materials, especially when used in conjunction with so-called activators such as formic acid. The use of methylene chloride is prohibited, however, in many countries because of the aforementioned environmental characteristics.

Industrial gluing processes utilize tools and fixtures which require regular cleaning. The adhesives used are often of the epoxy or polyurethane type.

Moulds and tools which require to be cleaned of rubber residues in order to ensure their effective function are used in the rubber industry. Methylene chloride in various formulations is used almost exclusively for this cleaning.

There is thus no acceptable agent available which is suitable for use in an effective and environmentally friendly fashion in the above-mentioned applications.

The principal object of the present invention is thus, in the first instance, to identify replacement agents for chlorinated solvents, primarily methylene chloride, which also exhibit acceptable environmental and technical characteristics.

The aforementioned object is achieved by means of an agent in accordance with the present invention, which is characterized essentially in that it contains N-methyl-2-pyrrolidon, with the addition of alkaline salt of unsaturated fatty acids and water.

The possibility of using N-methyl-2-pyrrolidon, the commonly used acronym for which is NMP, for removing paint and lacquer from components made of wood or metal, for example, is previously disclosed. NMP possesses a low surface tension and penetrates the paint layer, which then swells up and is released from the substrate and can then be removed easily, for example by brushing or spraying with water. Pure NMP is only suitable for use with "simpler" paint materials, however, such as alkyd or acrylic paints. The nature of the treatment applied to the base material is also very important. A chromated aluminium surface or a phosphated steel surface thus offers very good adhesion to the paint material, which makes its removal difficult to a high degree. It has emerged in the course of laboratory tests and practical operating tests that the addition of small quantities of potassium oleate or other alkaline salts of unsaturated fatty acids significantly improve the ability of NMP to penetrate layers of paint and bring about the release of the aforementioned layers from chromated or phosphated substrates.

The optimal function is achieved at a high temperature within the range 80-110°, preferably in a thermostatically controlled tank. Adhesive and rubber residues can also be removed with this method. Potassium oleate is the potassium salt of oleic acid. Oleic acid belongs to the group of unsaturated fatty acids, i.e. they contain one or more double bonds. A characteristic exhibited by these substances is that they oxidize easily at high temperatures. Potassium oleate thus oxidizes at a high temperature and forms acidic products, nonanic and azelaic acid, which significantly impair the durability and function of the agent. Countless commercially available, so-called oxidation inhibitors have been tested in an effort to prevent the aforementioned oxidation, but without yielding any results. It has nevertheless been found in laboratory tests and in tests conducted under practical operating conditions that the addition of a small quantity of water, which is usually not desired in NMP formulations, gives the intended positive effect. The content of water should preferably be between 1.0 and 15 %, calculated in relation to the quantity of NMP.

The addition of aliphatic alcohols, for example ethyl alcohol, significantly improves the dissolving of the aforementioned alkaline salts. The content of aliphatic alcohol is preferably between 1 and 10 %.

### Examples

One way of measuring the acidification in a cleaning agent in accordance with the foregoing is to measure the consumption of 0.1-n sodium hydroxide solution per 5 ml of sample by electrometric titration to pH 9.4. This consumption in ml is referred to as the acid value.

A sample which was aged at 110°C for 1 000 hours and contained 3% of potassium oleate was found at the end of the test to have an acid value = 8.0 and a non-existent function.

Another sample which was aged as described above, and which, in addition to 3% potassium oleate, also contained 6% water, was found at the end of the test to have an acid value = 2.5 and a perfectly adequate function. The appropriate content of potassium oleate is preferably between 0.2 and 6 %, calculated in relation to the quantity of N-methyl-2-pyrrolidon.

It has emerged in the course of practical tests that the addition of a small quantity of water to a solution of NMP and potassium oleate significantly shortens the process time for the removal of paint, adhesive and rubber from components made of metal or plastic.

A single agent in accordance with the present invention solves the aforementioned problems in a simple and effective, as well as an environmentally friendly, fashion.

The invention is naturally not restricted to the above description. Modifications are possible, especially with regard to the nature of the agent or through the use of equivalent technology, without departing from the area of protection for the invention as defined in the Patent Claims.

## Claims

1. Agent for cleaning objects, such as the removal of paint, lacquer, rubber, adhesive and plastic **characterized in that** the agent consist of N-methyl-2-pyrrolidon with the addition of alkaline salt of unsaturated fatty acids and water, and with an optional addition of aliphatic alcohol.

2. Agent in accordance with Patent Claim 1, ***characterized in that*** the alkaline salt is in the form of potassium oleate.

3. Agent in accordance with one or other of Patent Claims 1-2, ***characterised in that*** the content of alkaline salt is between 0.2 and 6 %, calculated in relation to the quantity of N-methyl-2-pyrrolidon.

4. Agent in accordance with Patent Claim 3, ***characterized in that*** the content of water is between 1.0 and 15 %, calculated in relation to the quantity of NMP.

5. Agent in accordance with Patent Claim 5, **characterized in that** the content of aliphatic alcohol is between 1 and 10 %.

## Patentansprüche

1. Mittel zum Reinigen von Objekten, wie die Entfernung von Farbe, Lack, Gummi, Klebstoff und Kunststoff,
**dadurch gekennzeichnet, dass** das Mittel aus N-Methyl-2-pyrrolidon mit dem Zusatz an Alkalisalz ungesättigter Fettsäuren und Wasser und mit dem optionalen Zusatz an aliphatischem Alkohol besteht.

2. Mittel nach Patentanspruch 1,
**dadurch gekennzeichnet, dass** das alkalische Salz in der Form von Kaliumoleat vorliegt.

3. Mittel nach Patentanspruch 1 oder 2,
**dadurch gekennzeichnet, dass** der Gehalt an alkalischem Salz, berechnet im Verhältnis zu der Menge an N-Methyl-2-pyrrolidon, zwischen 0,2 und 6 % beträgt.

4. Mittel nach Patentanspruch 3,
**dadurch gekennzeichnet, dass** der Gehalt an Wasser, berechnet im Verhältnis zu der Menge an NMP, zwischen 1,0 und 15 % beträgt.

5. Mittel nach Patentanspruch 1,
**dadurch gekennzeichnet, dass** der Gehalt an aliphatischem Alkohol zwischen 1 und 10 % beträgt.

## Revendications

1. Produit pour le nettoyage d'objets, tel que pour l'enlèvement de peintures, de vernis, de caoutchouc, d'adhésif et de matière plastique, **caractérisé en ce que** le produit consiste en de la N-méthyl-2-pyrrolidone avec ajout de sel alcalin d'acides gras insaturés et d'eau, et ajout optionnel d'alcool aliphatique.

2. Produit selon la revendication 1 du brevet, **caractérisé en ce que** le sel alcalin est sous forme d'oléate de potassium.

3. Produit selon l'une quelconque des revendications 1 à 2 du brevet, **caractérisé en ce que** la teneur en sel alcalin est comprise entre 0,2 et 6%, calculée par rapport à la quantité de N-méthyl-2-pyrrolidone.

4. Produit selon la revendication 3 du brevet, **caractérisé en ce que** la teneur en eau est comprise entre 1,0 et 15%, calculée par rapport à la quantité de N-méthyl-2-pyrrolidone.

5. Produit selon la revendication 3 du brevet, **caractérisé en ce que** la teneur en alcool aliphatique est comprise entre 1 et 10%.
